# DEMANDE DE BREVET EUROPEEN

(11) **EP 4 024 109 A1**
(43) Date de publication de la demande: **06.07.2022**
(21) Numéro de dépôt: 21207602.0
(22) Date de dépôt: 10.11.2021
(51) Int. Cl.: G02B 6/44

(54) **BOÎTIER DE RACCORDEMENT OPTIQUE**

(30) Priorité: 29.12.2020 FR 2014209
(71) Demandeur: Nexans, 92400 Courbevoie (FR)
(72) Inventeur: JEAN, Jérémy, 08350 VRIGNE-AUX-BOIS (FR); PHILIPS, Guillaume, 08300 NOVY-CHEVRIEREES (FR); LOTERIE, Julien, 7370 ELOUGES (BE); HELVENSTEIN, Réal, 7022 HARMIGNIES (BE)
(74) Mandataire: Ipsilon

(57) **Abrégé**

Ce boîtier (2) de raccordement de câbles optiques monofibres comporte une base, un sommet situé à une extrémité du boîtier (2) opposée à sa base et au moins deux côtés (24, 26) situés entre la base et le sommet, au moins un organiseur (28) pour gestion de fibres nues disposé sur au moins un des côtés (24, 26) précités et au moins une cassette (10) d'épissurage de câbles à fibres (F) optiques disposée entre la base et le sommet. L'organiseur (28) pour gestion de fibres nues présente au moins une entrée latérale (29), alimentant un premier flux de fibres suivant une première direction, par une première région et au moins une entrée additionnelle située au niveau de la base ou du sommet, alimentant un second flux de fibres suivant une seconde direction perpendiculaire à la première direction, par une seconde région, avec des fibres (F) optiques des câbles optiques monofibres.

## Description

La présente invention se rapporte à un boîtier de raccordement optique, c'est-à-dire un boîtier de raccordement de câbles à fibres optiques.

L'invention appartient au domaine des câbles à fibres optiques, appelés aussi câbles optiques. Plus particulièrement, l'invention appartient au domaine des dispositifs et procédés permettant le rangement, l'acheminement, le raccordement et la répartition de tels câbles.

Il est connu en soi d'utiliser des boîtiers de raccordement optique, comportant divers éléments de stockage, épissurage et acheminement de fibres optiques, typiquement sous la forme de cassettes d'épissurage et de dispositifs appelés organiseurs, afin d'ordonner, assembler et raccorder des fibres optiques et permettre leur cheminement entre divers points de parcours et de distribution de signaux de communication et de données transportés via ces fibres optiques.

On connaît divers types d'organiseurs, parmi lesquels se trouvent les organiseurs dits « SFM » (sigle anglo-saxon pour « Single Fiber Management », gestion de câbles optiques monofibres), dédiés à la gestion de câbles optiques composés d'un seul guide de lumière.

Ces organiseurs équipent des boîtiers de raccordement qui se présentent généralement sous la forme d'une ou plusieurs colonnes de cassettes d'épissurage, les cassettes étant disposées les unes au-dessus des autres dans chaque colonne et fixées sur le châssis du boîtier de raccordement.

Toutefois, les organiseurs SFM actuels présentent plusieurs inconvénients.

Tout d'abord, ils présentent généralement des entrées de fibres uniquement à leur sommet ou à leur base.

Différentes fibres optiques peuvent être contenues dans un même faisceau qui, lors du câblage, est acheminé vers l'organiseur. Les fibres de ce faisceau sont ensuite guidées dans l'organiseur vers l'entrée des cassettes. Dans certains cas, il peut être décidé de rediriger une fibre non épissurée vers une autre cassette d'épissurage. En l'absence d'entrée ailleurs qu'à la base ou au sommet de l'organiseur, la fibre à rediriger doit cheminer tout le long de la paroi verticale de l'organiseur jusqu'à sa base, puis remonter jusqu'à l'entrée de sa cassette de destination. Cela augmente le temps de câblage. De plus, cela contraint à gérer une surlongueur de fibre souvent significative pour réaliser le cheminement souhaité, ce qui rend le câblage plus complexe.

Par ailleurs, les entrées uniquement au sommet ou à la base de l'organiseur SFM obligent l'installateur à dénuder la totalité des tubes à fibres optiques et à nettoyer toutes les fibres optiques de tous les câbles pour pouvoir les introduire à l'intérieur des cassettes d'épissurage. Cela provoque à la fois une perte de temps et une augmentation du risque de rupture d'une fibre optique.

En outre, la présence de nombreuses fibres optiques sur les voies de cheminement vertical de l'organiseur rend la maintenance complexe.

La présente invention a pour but de remédier aux inconvénients précités de l'art antérieur.

Dans ce but, la présente invention propose un boîtier de raccordement de câbles optiques monofibres, comportant :
une base, un sommet situé à une extrémité du boîtier opposée à sa base et au moins deux côtés situés entre la base et le sommet ;
au moins un organiseur pour gestion de fibres nues disposé sur au moins un des côtés précités ;
au moins une cassette d'épissurage de câbles à fibres optiques disposée entre la base et le sommet précités ;
le boîtier de raccordement étant remarquable en ce que l'organiseur pour gestion de fibres nues présente au moins une entrée latérale, alimentant un premier flux de fibres suivant une première direction, par une première région et au moins une entrée additionnelle située au niveau de la base ou du sommet précité,
alimentant une second flux de fibres suivant une seconde direction perpendiculaire à la première direction, par une seconde région, avec des fibres optiques des câbles optiques monofibres précités.

Ainsi, la ou les entrée(s) latérale(s) de l'organiseur pour gestion de fibres nues permet(tent) le câblage direct des fibres optiques uniquement vers leur cassette de destination, tout en facilitant l'acheminement de fibres d'une cassette à une autre lorsque cela est nécessaire et en simplifiant donc le câblage.

La ou les entrée(s) additionnelle(s) offre(nt) une option de plus pour optimiser le trajet des fibres optiques dans le boîtier de raccordement, en les y faisant entrer soit par un côté, soit par la base, soir par le sommet, notamment en fonction de la ou des cassettes de destination des fibres entrantes.

La présente invention offre un gain de temps considérable, car le temps passé à dénuder et nettoyer les fibres optiques est optimisé. D'autre part, la maintenance est facilitée, du fait de la nette diminution de la quantité de fibres optiques cheminant le long des côtés du boîtier de raccordement, ce qui dégage d'autant le passage vers chaque cassette, pour effectuer cassette par cassette d'éventuelles réparations sur des fibres.

Cette présence d'entrées latérales de fibres sur l'organiseur pour gestion de fibres nues permet en outre, le cas échéant, d'acheminer directement la fibre souhaitée vers un panneau de brassage contigu à l'organiseur pour gestion de fibres nues.

Par ailleurs, l'invention offre de nombreuses opportunités en conférant une forte modularité aux boîtiers de raccordement ainsi équipés. Elle peut être utilisée partout sur un réseau à fibres optiques, par exemple en répartiteur optique, en boîtier étanche sous-marin, souterrain ou aérien, du central téléphonique jusqu'à l'intérieur des bâtiments.

Dans un mode particulier de réalisation, l'organiseur pour gestion de fibres nues comporte au moins une partie formant un pont et au moins un peigne à fibres optiques coopérant avec l'au moins partie formant pont précitée pour recevoir et arrimer les fibres optiques des câbles optiques précités, le pont délimitant d'une part, la première région précitée, d'un premier côté du pont, où des fibres des câbles optiques précités cheminent dans l'organiseur pour gestion de fibres nues le long des côtés précités, suivant le second flux précité et d'autre part, la seconde région précitée, d'un second côté du pont, où des fibres des câbles optiques précités entrent dans l'organiseur pour gestion de fibres nues via le peigne précité, suivant le premier flux précité.

Cela permet d'éviter que des fibres optiques arrivant par la ou les entrées latérales prévues dans l'organiseur pour gestion de fibres nues croisent des fibres optiques cheminant verticalement dans l'organiseur pour gestion de fibres nues le long des côtés du boîtier de raccordement. Cela permet en outre de recevoir plusieurs modules à fibres optiques F dans une même entrée, en plus de permettre le croisement des fibres nues grâce au pont.

Dans un mode particulier de réalisation, le boîtier de raccordement comporte deux organiseurs pour gestion de fibres nues situés chacun sur un des côtés précités, chacun de ces deux organiseurs pour gestion de fibres nues présentant au moins une entrée latérale de fibres optiques des câbles optiques monofibres précités.

Cela accroît encore davantage l'accessibilité latérale des cassettes et facilite donc les opérations de câblage et de maintenance, du fait des accès de part et d'autre des cassettes.

Dans un mode particulier de réalisation, l'au moins un organiseur pour gestion de fibres nues comporte une pluralité de pattes de maintien de fibres optiques, ces pattes étant disposées le long de l'au moins un organiseur pour gestion de fibres nues, à des distances prédéterminées les unes des autres, sur au moins une partie de l'au moins un organiseur pour gestion de fibres nues.

Ainsi, les fibres optiques sont maintenues et guidées dans leur cheminement sans qu'il soit nécessaire d'ajouter des éléments de fixation extérieurs au boîtier.

Dans un mode particulier de réalisation, l'au moins un organiseur pour gestion de fibres nues présente une paroi latérale comportant au moins un passage adapté au cheminement de fibres optiques des câbles optiques précités qui sortent de l'au moins une cassette d'épissurage.

Cela permet aux fibres sortantes de cheminer directement, i.e. sans parcours vertical le long d'un des côtés du boîtier, soit vers un panneau de brassage contigu à l'organiseur pour gestion de fibres nues ou disposé au voisinage de celui-ci, soit vers une entrée de fibres d'un autre organiseur pour gestion de fibres nues, par exemple sur une colonne de cassettes contiguë à la colonne dont sortent les fibres, ou située au dos de celle-ci.

En effet, selon une première variante de ce mode de réalisation où le boîtier de raccordement comporte au moins deux colonnes chacune constituée d'une pluralité desdites cassettes d'épissurage, l'au moins un passage est adapté au cheminement de fibres optiques des câbles optiques précités suivant un plan parallèle à la base directement entre deux des au moins deux colonnes précitées.

De façon similaire, selon une seconde variante de ce mode de réalisation où le boîtier de raccordement comporte au moins une colonne constituée d'une pluralité des cassettes d'épissurage précitées et une zone de brassage de fibres optiques des câbles optiques précités, l'au moins un passage est adapté au cheminement de fibres optiques des câbles optiques précités suivant un plan parallèle à la base directement entre l'au moins une colonne et la zone de brassage.

Toujours dans le même mode particulier de réalisation, dans la première ou la seconde variante ou toute autre variante appropriée, selon une caractéristique particulière, lorsque l'au moins un organiseur pour gestion de fibres nues comporte la pluralité précitée de pattes de maintien de fibres optiques, l'au moins un passage est situé entre deux pattes successives de la pluralité de pattes.

Cela permet d'optimiser le cheminement des fibres, sans avoir de surlongueur significative à gérer à l'installation et sans nécessiter d'aménagements additionnels dans le boîtier de raccordement.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une vue d'ensemble d'un boîtier de raccordement optique conforme à la présente invention, dans un mode particulier de réalisation ;
[Fig. 2] est une représentation schématique d'un boîtier de raccordement optique conforme à la présente invention, dans un mode particulier de réalisation ;
[Fig. 3] est une vue schématique partielle agrandie d'un organiseur pour gestion de fibres nues compris dans le boîtier de raccordement de la figure 2 ;
[Fig. 4] est une vue schématique partielle agrandie montrant certains détails de réalisation d'un organiseur pour gestion de fibres nues compris dans un boîtier de raccordement optique conforme à la présente invention, dans un autre mode particulier de réalisation ;
[Fig. 5] est une vue schématique d'un boîtier de raccordement optique conforme à la présente invention, dans un autre mode particulier de réalisation ;
[Fig. 6] est une vue schématique montrant le cheminement d'une fibre optique entre deux organiseurs pour gestion de fibres nues compris dans des boîtiers de raccordement conformes à la présente invention, dans un autre mode particulier de réalisation.

### Description de mode(s) de réalisation

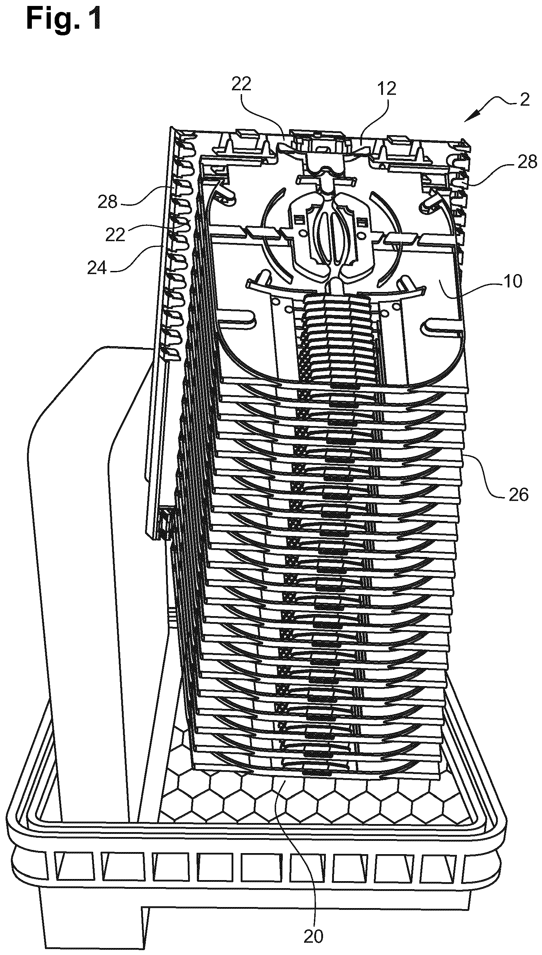

Comme le montre la vue d'ensemble de la figure 1, dans un mode particulier de réalisation, un boîtier 2 de raccordement de câbles optiques monofibres conforme à la présente invention, ci-après dénommé « boîtier 2 », comporte une base 20, un sommet 22 situé à une extrémité du boîtier 2 opposée à la base 20 et deux côtés 24, 26 situés entre la base 20 et le sommet 22. Ce nombre de côtés n'est pas limitatif, le boîtier 2 pouvant en comporter plus de deux, s'il est de section globalement polygonale suivant un polygone à au moins trois côtés, par exemple.

Le boîtier 2 comporte en outre au moins un organiseur 28 pour gestion de fibres nues. De façon générale, l'organiseur 28 pour gestion de fibres nues est situé sur au moins un des côtés du boîtier 2. Dans le mode particulier de réalisation de la figure 1, le boîtier 2 comporte deux organiseurs 28 pour gestion de fibres nues situés respectivement sur les côtés 24 et 26. Ce nombre particulier d'organiseurs 28 pour gestion de fibres nues n'est pas limitatif. Le boîtier 2 peut n'en comporter qu'un seul, ou plus de deux.

Le boîtier 2 comporte en outre une ou plusieurs cassettes 10 d'épissurage de câbles à fibres optiques disposées entre la base 20 et le sommet 22. Dans le mode particulier de réalisation de la figure 1, le boîtier 2 comporte un châssis 12 et une colonne constituée de plusieurs cassettes 10 d'épissurage disposées les unes au-dessus des autres.

La ou les cassettes 10 sont reliées au châssis 12 par tout moyen approprié tel que charnière ou autre articulation, vis ou autre élément de fixation, collage, partie flexible du châssis 12 ou d'une cassette 10, etc. En variante, les cassettes peuvent être réalisées d'un seul tenant avec le châssis 12, par exemple par moulage.

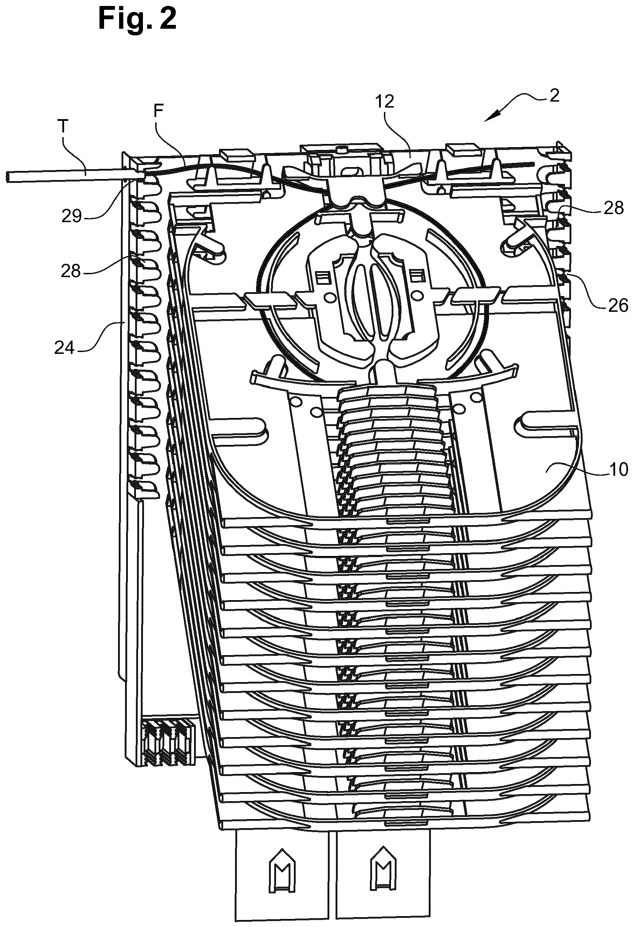

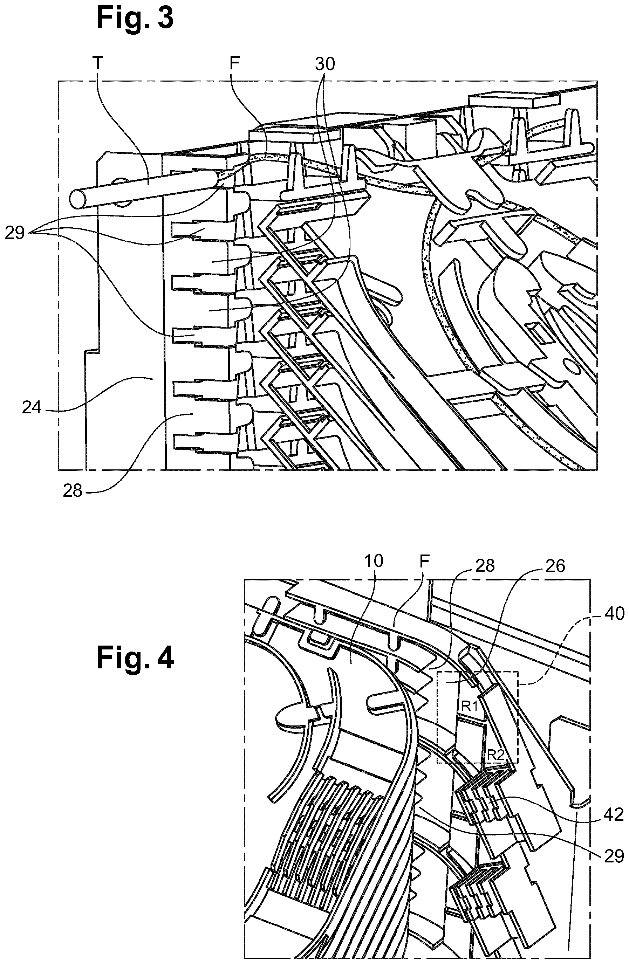

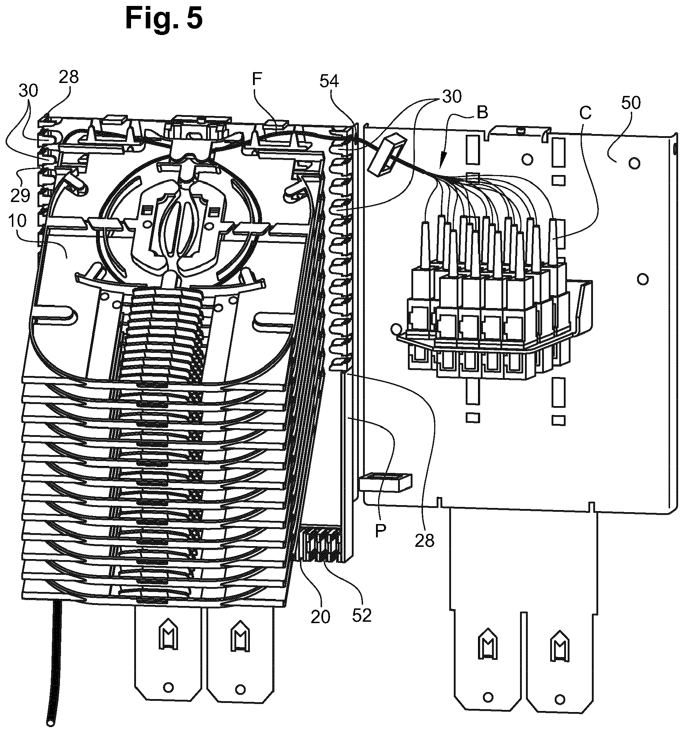

Conformément à la présente invention, l'au moins un organiseur 28 pour gestion de fibres nues présente au moins une entrée latérale 29, alimentant un flux horizontal de fibres optiques, par une première région R1 (visible sur la figure 4) et au moins une entrée additionnelle 52 située au niveau de la base 20 (comme le montre la figure 5) ou du sommet 22, alimentant un flux vertical de fibres optiques, par une seconde région R2 (visible sur la figure 4), avec des fibres F optiques des câbles optiques monofibres. Dans le mode de réalisation de la figure 1, les deux organiseurs 28 pour gestion de fibres nues présentent une série d'entrées latérales 29 (non visibles sur la figure 1, illustrées en détail sur les figures 2 à 6).

La figure 2 représente schématiquement le boîtier 2 dans un mode particulier de réalisation où, de même que dans le mode de réalisation de la figure 1, le boîtier 2 comporte deux organiseurs 28 pour gestion de fibres nues situés respectivement sur les côtés 24 et 26 du boîtier.

Dans le mode de réalisation de la figure 2, de même que dans le mode de réalisation de la figure 1, les organiseurs 28 pour gestion de fibres nues présentent chacun une série d'entrées latérales 29 de fibres optiques F.

Ces fibres optiques F sont comprises dans des câbles optiques monofibres, c'est-à-dire des câbles optiques composés d'un seul guide de lumière. Comme représenté, à titre d'exemple non limitatif, une fibre optique F entrant dans le boîtier 2 de raccordement par une entrée latérale 29 peut être contenue dans un tube T. Pour plus de clarté du dessin, seul un tube T a été représenté. A titre d'exemple non limitatif, le tube T illustré entre dans le boîtier 2 par une entrée latérale 29 qui se trouve au sommet du boîtier 2, dans l'organiseur 28 pour gestion de fibres nues situé sur le côté 24 du boîtier 2.

La figure 3 est une vue agrandie partielle du boîtier 2 de la figure 2 vu sous un angle différent, montrant plus en détail une partie de la série d'entrées latérales 29.

Dans le mode particulier de réalisation illustré sur les figures 2 et 3, l'organiseur 28 pour gestion de fibres nues situé sur chaque côté 24, 26 du boîtier 2 (seul le côté 24 est visible sur la figure 3) comporte une pluralité de pattes 30 de maintien de fibres optiques.

Les pattes 30 sont disposées le long de l'organiseur 28 pour gestion de fibres nues, sur au moins une partie de celui-ci. Elles sont disposées de façon espacée les unes des autres. Les distances entre deux pattes 30 voisines sont déterminées en fonction de l'application considérée, ne sont pas nécessairement identiques, mais peuvent l'être, comme c'est le cas dans le mode de réalisation illustré.

La figure 4 montre un autre mode de réalisation du boîtier 2.

Dans ce mode de réalisation, l'organiseur 28 pour gestion de fibres nues comporte une ou plusieurs parties 40 formant chacune un pont. Chaque pont délimite d'une part, la première région R1, d'un premier côté du pont, où des fibres optiques F cheminent dans l'organiseur 28 pour gestion de fibres nues le long des côtés 24, 26 suivant le flux vertical (seul le côté 26 est visible sur le dessin) et d'autre part, la seconde région R2, d'un second côté du pont, où des fibres optiques F entrent dans l'organiseur 28 pour gestion de fibres nues suivant le flux horizontal, via un peigne 42 prévu en complément du pont, le peigne 42 coopérant avec la partie 40 afin de faciliter la réception et l'arrimage des modules à fibres optiques F entrants.

Dans le mode de réalisation de la figure 4, la région R1 d'un premier côté du pont est sur le pont et la région R2 d'un second côté du pont est à côté du pont. Grâce au pont, les fibres optiques F verticales, d'une part (c'est-à-dire cheminant le long de la colonne de cassettes 10, par le dessus du pont en région R1) et les fibres entrantes et arrimées au peigne, d'autre part (dans la région R2 et par le dessous du pont) peuvent se croiser sans se mélanger ni interférer.

La figure 5 illustre un autre mode de réalisation du boîtier 2, dans lequel le boîtier 2 comporte en outre un panneau 50 de brassage où s'effectue le raccordement des fibres F optiques à des connecteurs C. La figure 5 montre plus particulièrement le cheminement d'une fibre F optique entre une cassette 10 d'épissurage et ce panneau 50 de brassage.

Comme décrit plus haut, dans ce mode particulier de réalisation, le boîtier 2 comporte à sa base 20 des entrées additionnelles 52 de fibres optiques F. A titre d'exemple nullement limitatif, ces entrées additionnelles 52 se présentent sous la forme d'un support peigne.

En outre, dans le mode de réalisation de la figure 5, l'organiseur 28 pour gestion de fibres nues présente une paroi latérale P comportant un ou plusieurs passages 54 adaptés au cheminement de fibres optiques F qui sortent des cassettes 10 d'épissurage.

Par ailleurs, dans le mode de réalisation de la figure 5, le boîtier 2 comporte une ou plusieurs colonnes constituées chacune d'une pluralité de cassettes 10 d'épissurage et une zone B de brassage de fibres optiques F sur le panneau 50 de brassage.

Le passage 54 est adapté au cheminement de fibres optiques F directement entre une des colonnes de cassettes 10 et la zone de brassage B, par exemple suivant un plan sensiblement parallèle à la base 20 du boîtier 2, c'est-à-dire par exemple sensiblement horizontalement, si la base 20 du boîtier 2 repose sur une surface horizontale.

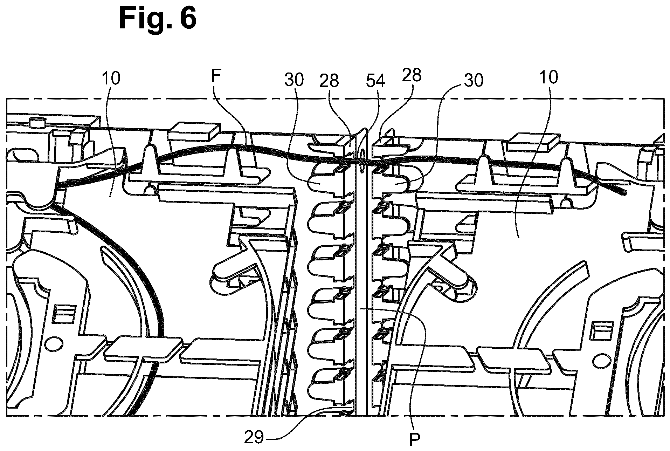

La figure 6 montre un autre mode de réalisation, où le boîtier 2 comporte un nombre de colonnes supérieur ou égal à deux (une partie de deux de ces colonnes est visible sur le dessin), chaque colonne étant constituée d'une pluralité de cassettes 10. Le passage 54 est adapté au cheminement de fibres optiques F directement entre deux de ces colonnes, par exemple suivant un plan sensiblement parallèle à la base 20 du boîtier 2, c'est-à-dire par exemple sensiblement horizontalement, si la base 20 du boîtier 2 repose sur une surface horizontale.

Dans les modes de réalisation où l'organiseur 28 pour gestion de fibres nues est équipé des pattes 30 susmentionnées, le passage 24 peut par exemple être situé entre deux pattes 30 successives de la série de pattes.

## Revendications

1. Boîtier (2) de raccordement de câbles optiques monofibres, comportant :
une base (20), un sommet (22) situé à une extrémité du boîtier (2) opposée à ladite base (20) et au moins deux côtés (24, 26) situés entre ladite base (20) et ledit sommet (22) ;
au moins un organiseur (28) pour gestion de fibres nues disposé sur au moins un desdits côtés (24, 26) ;
au moins une cassette (10) d'épissurage de câbles à fibres (F) optiques disposée entre ladite base (20) et ledit sommet (22) ;
ledit boîtier (2) de raccordement étant **caractérisé en ce que** ledit au moins un organiseur (28) pour gestion de fibres nues présente au moins une entrée latérale (29), alimentant un premier flux de fibres suivant une première direction, par une première région (R1) et au moins une entrée additionnelle (52) située au niveau de ladite base (20) ou dudit sommet (22), alimentant un second flux de fibres suivant une seconde direction perpendiculaire à ladite première direction, par une seconde région (R2), avec des fibres (F) optiques desdits câbles optiques monofibres.

2. Boîtier (2) de raccordement selon la revendication 1, **caractérisé en ce que** ledit organiseur (28) pour gestion de fibres nues comporte au moins une partie (40) formant un pont et au moins un peigne (42) à fibres (F) optiques coopérant avec ladite au moins une partie (40) pour recevoir et arrimer lesdites fibres (F) optiques desdits câbles optiques, ledit pont délimitant d'une part, ladite première région (R1), d'un premier côté dudit pont, où des fibres (F) desdits câbles optiques cheminent dans ledit au moins un organiseur (28) pour gestion de fibres nues le long desdits côtés (24, 26) suivant ledit second flux et d'autre part, ladite seconde région (R2), d'un second côté dudit pont, où des fibres (F) desdits câbles optiques entrent dans ledit au moins un organiseur (28) pour gestion de fibres nues via ledit peigne (42), suivant ledit premier flux.

3. Boîtier (2) de raccordement selon la revendication 1 ou 2, **caractérisé en ce qu'**il comporte deux organiseurs (28) pour gestion de fibres nues situés chacun sur un desdits côtés (24, 26), chacun desdits deux organiseurs (28) pour gestion de fibres nues présentant au moins une entrée latérale (29) de fibres (F) optiques desdits câbles optiques monofibres.

4. Boîtier (2) de raccordement selon la revendication 1, 2 ou 3, **caractérisé en ce que** ledit au moins un organiseur (28) pour gestion de fibres nues comporte une pluralité de pattes (30) de maintien de fibres (F) optiques, lesdites pattes (30) étant disposées le long dudit au moins un organiseur (28) pour gestion de fibres nues, à des distances prédéterminées les unes des autres, sur au moins une partie dudit au moins un organiseur (28) pour gestion de fibres nues.

5. Boîtier (2) de raccordement selon l'une quelconque des revendications précédentes, **caractérisé en ce que** ledit au moins un organiseur (28) pour gestion de fibres nues présente une paroi latérale (P) comportant au moins un passage (54) adapté au cheminement de fibres (F) optiques desdits câbles optiques qui sortent de ladite au moins une cassette (10) d'épissurage.

6. Boîtier (2) de raccordement selon la revendication 5, comportant au moins deux colonnes chacune constituée d'une pluralité desdites cassettes (10) d'épissurage, **caractérisé en ce que** ledit au moins un passage (54) est adapté au cheminement de fibres (F) optiques desdits câbles optiques suivant un plan parallèle à ladite base (20) directement entre deux desdites au moins deux colonnes.

7. Boîtier (2) de raccordement selon la revendication 5, comportant au moins une colonne constituée d'une pluralité desdites cassettes (10) d'épissurage et une zone de brassage de fibres (F) optiques desdits câbles optiques, **caractérisé en ce que** ledit au moins un passage (54) est adapté au cheminement de fibres (F) optiques desdits câbles optiques suivant un plan parallèle à ladite base (20) directement entre ladite au moins une colonne et ladite zone de brassage.

8. Boîtier (2) de raccordement selon la revendication 4 et la revendication 5, 6 ou 7, **caractérisé en ce que** ledit au moins un passage (54) est situé entre deux pattes (30) successives de ladite pluralité de pattes (30).
